# EUROPÄISCHE PATENTANMELDUNG

(11) **EP 4 570 739 A1**
(43) Veröffentlichungstag der Anmeldung: **18.06.2025**
(21) Anmeldenummer: 24211363.7
(22) Anmeldetag: 07.11.2024
(51) Int. Cl.: B66F 9/075, B62D 33/06

(54) **FAHRERARBEITSPLATZEINHEIT FÜR EINEN SCHUBMASTSTAPLER**

(30) Priorität: 13.12.2023 DE 102023134973
(71) Anmelder: STILL GmbH, 22113 Hamburg (DE)
(72) Erfinder: Nather, Philipp, 21447 Handorf (DE); Haubrich, Marianne, 22307 Hamburg (DE)
(74) Vertreter: Patentship Patentanwaltgesellschaft

(57) **Zusammenfassung**

Die Erfindung betrifft eine Fahrerarbeitsplatzeinheit (2) für einen Schubmaststapler (1), wobei die Fahrerarbeitsplatzeinheit (2) einen Fahrerarbeitsplatz (F) enthält. Die Fahrerarbeitsplatzeinheit (2) weist eine tragende Strebenkonstruktion (20) auf, die ein linkes tragendes Strebenelement (20a) und ein rechtes tragendes Strebenelement (20b) und mindestens ein, das linke Strebenelement (20a) und das rechte Strebenelement (20b) verbindendes tragendes Querverbindungselement (21a; 21b; 21c; 21d) umfasst, wobei an der tragenden Strebenkonstruktion (20) mindestens ein nicht-tragendes Verkleidungselement (22a; 22b; 22c; 22d) lösbar befestigt ist.

## Beschreibung

Die Erfindung betrifft eine Fahrerarbeitsplatzeinheit für einen Schubmaststapler, wobei die Fahrerarbeitsplatzeinheit einen Fahrerarbeitsplatz enthält.

Bei Schubmaststaplern ist in der Regel ein Aufbau mit einem Fahrzeugchassis und mit einer Fahrerarbeitsplatzeinheit vorgesehen, die als separate Einheit auf dem Fahrzeugchassis montiert und befestigt werden kann. Das Fahrzeugchassis umfasst einen Fahrzeugrahmen, ein Antriebsrad, an Radarmen angeordnet Lastrollen, einen Fahrantrieb, einen Lenkantrieb, eine Hydraulikanlage, eine Bremsanlage und eine Traktionsbatterie. An dem Fahrzeugchassis ist zudem an den Radarmen eine Hubmast in Fahrzeuglängsrichtung verschiebbar angeordnet. Das Fahrzeugchassis weist somit die wesentlichen technischen Bauelemente des Schubmaststaplers auf und wird auch als sogenanntes Rolling-Chassis bezeichnet.

Die eine separate Einheit bildende Fahrerarbeitsplatzeinheit, innerhalb der der Fahrerarbeitsplatz angeordnet ist, ist mit den wesentlichen Bedienelemente versehen, beispielsweise Lenkrad, Pedaleinheit, Bedienelemente, Fahrersitz, Ablagefächer. Eine weitere Funktion der Fahrerarbeitsplatzeinheit besteht in dem Schutz des in der Fahrerarbeitsplatzeinheit befindlichen Fahrers, beispielsweise vor herunterfallenden Gegenständen oder umstürzenden Regalen. Die Fahrerarbeitsplatzeinheit ist für diese Schutzfunktion vertikal oben mit einem Fahrerschutzdach versehen. Die mit dem Fahrerschutzdach versehene Fahrerarbeitsplatzeinheit wird auf dem Fahrzeugchassis angeordnet und befestigt und auch als sogenanntes Top-Chassis bezeichnet.

Die Kombination aus Fahrerarbeitsplatzeinheit und Fahrerschutzdach besteht bei bekannten Schubmaststaplern aus miteinander verschweißten Blechelementen, beispielsweise Blechbiegeteilen oder Pressteilen, die gleichzeitig entsprechende Verkleidungselemente, wie eine rechte Seitenwand, eine linke Seitenwand, eine Vorderwand und eine Rückwand, der Fahrerarbeitsplatzeinheit bilden, und an denen Vertikalstreben angeschweißt sind, die das Fahrerschutzdach tragen und an denen das Fahrerschutzdach befestigt ist.

Einen Schubmaststapler, der aus einem Fahrzeugchassis und einer eine separate Einheit bildenden Fahrerarbeitsplatzeinheit zusammengesetzt ist, ist aus der DE 10 2005 012 879 A1 bekannt.

Bei Schubmaststaplern weist die aus Fahrerarbeitsplatzeinheit und Fahrerschutzdach bestehende Kombination eine große Varianz auf. Aufgrund verschiedener Anforderungen an Markendifferenzierungen, sowie speziellen Kundenanforderungen sind bei bekannten Fahrerarbeitsplatzeinheiten, die aus miteinander verschweißten Blechelementen, die gleichzeitig Verkleidungselemente, wie eine rechte Seitenwand, eine linke Seitenwand, eine Vorderwand und eine Rückwand, der Fahrerarbeitsplatzeinheit bilden, hergestellt sind, oft einige Blechzuschnitte von einzelnen, entsprechende Verkleidungselemente bildenden Blechelementen der Fahrerarbeitsplatzeinheit unterschiedlich ausgeführt, so dass eine Vielzahl von Varianten der kompletten Fahrerarbeitsplatzeinheit gebildet und hergestellt werden muss. Zudem sind die Herstellkosten der Blechelemente, die gleichzeitig Verkleidungselemente bilden, hoch, da die Steifigkeitsanforderungen und Festigkeitsanforderungen der Fahrerarbeitsplatzeinheit nur über entsprechende dicke Blechstärken der Blechelemente und/oder gleichzeitig aufwändige Prägegeometrien der Blechelemente erzielt werden können, wodurch hohe Materialkosten sowie hohe Herstellkosten der Fahrerarbeitsplatzeinheit verursacht werden. Weiterhin entstehen durch die hohe Varianz der Fahrerarbeitsplatzeinheiten bei bekannten Fahrerarbeitsplatzeinheiten, die aus miteinander verschweißten Blechelementen, die gleichzeitig Verkleidungselemente, wie eine rechte Seitenwand, eine linke Seitenwand, eine Vorderwand und eine Rückwand, der Fahrerarbeitsplatzeinheit bilden, hergestellt sind, hohe Invest-, sowie Rüst- und Einstellkosten während der Fertigung.

Der vorliegenden Erfindung liegt die Aufgabe zugrunde, eine Fahrerarbeitsplatzeinheit der eingangs genannter Gattung zur Verfügung zu stellen, die hinsichtlich der genannten Nachteile verbessert ist.

Diese Aufgabe wird erfindungsgemäß dadurch gelöst, dass die Fahrerarbeitsplatzeinheit eine tragende Strebenkonstruktion aufweist, die ein linkes tragendes Strebenelement und ein rechtes tragendes Strebenelement und mindestens ein, das linke Strebenelement und das rechte Strebenelement verbindendes tragendes Querverbindungselement umfasst, wobei an der tragenden Strebenkonstruktion mindestens ein nicht-tragendes Verkleidungselement lösbar befestigt ist.

Als tragende Strebenkonstruktion bzw. tragendes Strebenelement bzw. tragendes Querverbindungselement im Sinne der Erfindung wird insbesondere eine Strebenkonstruktion bzw. ein Strebenelement bzw. ein Querverbindungselement angesehen, die alle Steifigkeitsanforderungen, Stabilitätsanforderungen und Festigkeitsanforderungen der Fahrerarbeitsplatzeinheit erfüllt.

Die erfindungsgemäße Fahrerarbeitsplatzeinheit weist mit der tragenden Strebenkonstruktion und den an der Strebenkonstruktion lösbar befestigten Verkleidungselementen eine modularen Aufbau auf, der in einfacher Weise ermöglicht, eine hohe Varianz von Fahrerarbeitsplatzeinheiten herzustellen.

Erfindungsgemäß ist somit die Fahrerarbeitsplatzeinheit aus einer einfach und kostengünstig herstellbaren tragende Strebenkonstruktion, beispielweise einer Rohrkonstruktion bzw. Profilkonstruktion, gefertigt, welche am Fahrzeugchassis befestigt werden kann. Die tragende Strebenkonstruktion umfasst ein linkes tragendes Strebenelement und ein rechtes tragendes Strebenelement und mindestens ein, das linke Strebenelement und das rechte Strebenelement verbindendes tragendes Querverbindungselement. Die tragende Strebenkonstruktion stellt somit in eine Art "Skelett" dar und erfüllt alle Anforderungen an Steifigkeit, Stabilität und Festigkeit der Fahrerarbeitsplatzeinheit. Etwaige erforderliche Stabilitätserhöhungen, die beispielsweise aus entsprechenden Kundenanforderungen entstehen, können an der tragende Strebenkonstruktion in einfacher Weise durch dickere Wandstärken der Strebenprofile, beispielsweise Rohrprofilen, günstig adaptiert werden bei Bedarf. An diese tragende Strebenkonstruktion sind mindestens ein nicht-tragendes Verkleidungselement lösbar befestigt. Die nicht-tragenden Verkleidungselemente müssen somit keine für die Steifigkeit, Stabilität und Festigkeit der Fahrerarbeitsplatzeinheit erforderlichen Kräfte aufnehmen und übertragen, so dass die nicht-tragenden Verkleidungselemente entsprechend kostengünstig hergestellt werden können und in einfacher Weise variiert werden können. Die entsprechende Anbauteile darstellenden nicht-tragenden Verkleidungselemente können bei der Erfindung in einfacher Weise unterschiedlich ausgeführt sein, beispielsweise hinsichtlich des Zuschnitts und/oder der Form und/oder der Farbe, wodurch in einfacher Weise eine funktionale und/oder optische Differenzierung erzielt werden kann. Zudem sind die Anforderungen an die entsprechende Anbauteile darstellenden nicht-tragenden Verkleidungselemente überwiegend optischer Natur, da die mechanischen Anforderungen hinsichtlich Steifigkeit, Stabilität und Festigkeit der Fahrerarbeitsplatzeinheit bereits durch die tragende Strebenkonstruktion vollständig erfüllt werden. Hierdurch eröffnen sich Möglichkeiten, die Verkleidungselemente kostengünstig aus dünneren Blechstärken herzustellen oder aus alternativen Materialien, beispielsweise Kunststoff, herzustellen. Hierdurch ergeben sich aus Kundensicht deutlich mehr Möglichkeiten, eine optische, aber auch funktionale Unterscheidung zu erzielen. Mit der Erfindung kann somit eine große Varianz der Fahrerarbeitsplatzeinheit in einfacher und kostengünstiger Weise bereitgestellt werden.

Gemäß einer bevorzugten Ausführungsform der Erfindung ist die tragende Strebenkonstruktion mit einer Befestigungsschnittstelle versehen, mittels der die Fahrerarbeitsplatzeinheit an einem Fahrzeugchassis des Schubmaststaplers lösbar befestigbar ist. Die von der tragenden Strebenkonstruktion gebildete Fahrerarbeitsplatzeinheit kann hierdurch in einfacher Weise an dem Fahrzeugchassis des Schubmaststaplers befestigt und montiert werden.

Gemäß einer bevorzugten Ausführungsform der Erfindung ist das Verkleidungselement als linke Seitenwand und/oder als rechte Seitenwand und/oder als Rückwand der Fahrerarbeitsplatzeinheit ausgebildet. Die linke Seitenwand begrenzt den Fahrerarbeitsplatz bevorzugt zur linken Fahrzeugseite. Die rechte Seitenwand begrenzt den Fahrerarbeitsplatz bevorzugt zur rechten Fahrzeugseite. Die Rückwand begrenzt den Fahrerarbeitsplatz bevorzugt zur Heckseite des Schubmaststaplers, in der weiterhin eine Einstiegsöffnung ausgebildet ist, die dem Fahrer den Ein- und Ausstieg in den Fahrerarbeitsplatz ermöglicht.

Gemäß einer bevorzugten Ausführungsform der Erfindung ist das Querverbindungselement als Vorderwand ausgebildet. Mit einem als Vorderwand ausgebildeten Querverbindungselement, das das linke Strebenelement mit dem rechten Strebenelement verbindet und aussteift, kann in einfacher Weise eine hohe Stabilität der tragenden Strebenkonstruktion erzielt werden.

Gemäß einer bevorzugten Ausführungsform der Erfindung ist das Querverbindungselement als vordere Querstrebe und/oder als hintere Querstrebe ausgebildet. Mit einem als vordere Quersterbe ausgebildeten Querverbindungselement, das das linke Strebenelement mit dem rechten Strebenelement verbindet und aussteift, kann in einfacher Weise eine hohe Stabilität der tragenden Strebenkonstruktion erzielt werden. Mit einem als hintere Quersterbe ausgebildeten Querverbindungselement, das das linke Stebenelement mit dem rechten Strebenelement verbindet und aussteift, kann in einfacher Weise eine hohe Stabilität der tragenden Strebenkonstruktion erzielt werden. Weiterhin kann durch entsprechende Gestaltung der hinteren Quersterbe in einfacher Weise eine ergonomisch günstige Einstiegsöffnung bereitgestellt werden, die dem Fahrer einen ergonomischen Ein- und Ausstieg in den Fahrerarbeitsplatz ermöglicht.

Gemäß einer bevorzugten Ausführungsform der Erfindung ist das Verkleidungselement mittels mindestens einer Schraubverbindung und/oder mittels mindestens einer Clips-Verbindung und/oder mittels mindestens einer Hakenverbindung an der tragenden Strebenkonstruktion lösbar befestigt ist. Denkbar ist insbesondere auch eine Kombination mehrerer dieser Verbindungsarten. So kann beispielsweise ein Verkleidungselement mit einer Hakenverbindung und einer Schraubverbindung an der tragenden Strebenkonstruktion lösbar befestigt werden, wodurch eine einfache und schnelle Montage des Verkleidungselements erzielt werden kann. Die tragende tragenden Strebenkonstruktion ist hierfür beispielsweise mit Nietmuttern oder Aufnahmebohrungen für Befestigungsschrauben an verschiedenen Stellen als Schnittstelle für die anzubringenden Verkleidungselement versehen.

Gemäß einer bevorzugten Ausführungsform der Erfindung ist die tragende Strebenkonstruktion mit Befestigungsschnittstellen versehen, an denen mindestens eine der folgenden Komponenten befestigt ist:
- Fahrersitz
- Lenkbedieneinheit, insbesondere ein Lenkrad
- Armauflage, insbesondere eine Armlehne
- Bodenplatte, insbesondere eine Bodenplatte mit mindestens einem Pedal
- Bedienelemente, insbesondere mindestes ein Bedienhebel
- Anzeigeelement, insbesondere ein Anzeigedisplay
- Elektronikhalter

Hierdurch können die genannten Komponenten in einfacher Weise an der tragenden Strebenkonstruktion angeordnet und befestigt werden.

Gemäß einer bevorzugten Ausführungsform der Erfindung ist die tragende Strebenkonstruktion mit dem Fahrerschutzdach versehen.

Das Fahrerschutzdach kann mit der tragenden Strebenkonstruktion starr verbunden sein, beispielsweise durch Verschweißen.

Gemäß einer bevorzugten Ausführungsform der Erfindung sind das linke Strebenelement und das rechte Strebenelement im vertikal oberen Bereich jeweils mit einer Befestigungsschnittstelle versehen, mittel der das Fahrerschutzdach an den Strebenelementen lösbar befestigt ist. Hierdurch wird es in einfacher Weise ermöglicht, verschiedene Varianten von Fahrerschutzdächern, beispielsweise eine Strebendach mit Metallstreben oder ein Glasdach, an der tragenden Strebenkonstruktion zu befestigen, so dass auch eine Varianz der Fahrerarbeitsplatzeinheit hinsichtlich verschiedener Ausführungen des Fahrerschutzdaches in einfacher Weise bereitgestellt werden kann.

Gemäß einer bevorzugten Ausführungsform der Erfindung umfasst das linke tragende Strebenelement und das rechte tragende Strebenelement jeweils eine vordere Vertikalstrebe und eine hintere Vertikalstrebe, die mittels mindestens einer Längsstrebe miteinander verbunden sind. Das linke tragende Strebenelement und das rechte tragende Strebenelement stellen somit eine leiterartige bzw. fachwerkartige Strebenkonstruktion dar, die in einfacher Weise derart hergestellt werden kann, dass die mechanischen Anforderungen an Steifigkeit, Stabilität und Festigkeit der Fahrerarbeitsplatzeinheit erfüllt werden.

Gemäß einer bevorzugten Ausführungsform der Erfindung sind die vordere Vertikalstrebe und die hintere Vertikalstrebe des rechten Strebenelements und des linken Strebenelements im vertikal oberen Bereich mittels einer oberen Längsstrebe miteinander verbunden, wobei die obere Längsstrebe mit der Befestigungsschnittstelle versehen ist, mittel der das Fahrerschutzdach an den Strebenelementen lösbar befestigt ist. Hierdurch wird ein einfacher Aufbau der beiden Strebenelemente aus wenigen Bauteilen erzielt, da die Vertikalstreben derart nach vertikal oben hochgezogen sind, dass an der oberen Längsstrebe die Befestigungsschnittstelle ausgebildet werden kann, an der das Fahrerschutzdach an den Strebenelementen lösbar befestigt ist.

Gemäß einer alternativen und ebenfalls bevorzugten Ausführungsform der Erfindung sind die vordere Vertikalstrebe und die hintere Vertikalstrebe des rechten Strebenelements und des linken Strebenelements im oberen Bereich mittels einer oberen Längsstrebe miteinander verbunden, wobei das linke tragende Strebenelement und das rechte tragende Strebenelement jeweils ein Tragelement umfassen, das an der oberen Längsstrebe befestigt ist, wobei das Tragelement im vertikal oberen Bereich mit der Befestigungsschnittstelle versehen ist, mittel der das Fahrerschutzdach an den Strebenelementen lösbar befestigt ist. Das linke tragende Strebenelement und das rechte tragende Strebenelement ist somit jeweils mit einem sich nach vertikal oben erstreckenden Tragelement versehen, an denen das Fahrerschutzdach lösbar befestigt ist. Hierdurch wird die Modularität und Varianz der Fahrerarbeitsplatzeinheit weiter erhöht, da in einfacher Weise unterschiedlich gestaltete Tragelemente an den beiden Strebenelementen verwendet werden können.

Gemäß einer bevorzugten Ausführungsform der Erfindung ist das Tragelement als Rohrprofil ausgebildet. Mit einem als Rohrprofil ausgebildete Tragelement können in einfacher Weise die mechanischen Anforderungen an Steifigkeit, Stabilität und Festigkeit des an der Fahrerarbeitsplatzeinheit befestigte Fahrerschutzdaches erfüllt werden.

Gemäß einer bevorzugten Ausführungsform der Erfindung ist die Vertikalstrebe jeweils als Rohrprofil oder als Winkelprofil ausgebildet. Hierdurch können die mechanischen Anforderungen an Steifigkeit, Stabilität und Festigkeit der Fahrerarbeitsplatzeinheit in einfacher Weise erfüllt werden.

Gemäß einer bevorzugten Ausführungsform der Erfindung ist die Längsstrebe als Rohrprofil oder als Winkelprofil ausgebildet ist. Hierdurch können die mechanischen Anforderungen an Steifigkeit, Stabilität und Festigkeit der Fahrerarbeitsplatzeinheit in einfacher Weise erfüllt werden.

Gemäß einer bevorzugten Ausführungsform der Erfindung ist das linke tragende Strebenelement und das rechte tragende Strebenelement jeweils als Schweißkonstruktion ausgebildet. Bei einer derartigen Schweißkonstruktion sind die vordere Vertikalstrebe, die hintere Vertikalstrebe und die mindestens eine Längsstrebe, die das linke bzw. rechte Strebenelement bilden, miteinander verschweißt. Hierdurch können die mechanischen Anforderungen an Steifigkeit, Stabilität und Festigkeit der Fahrerarbeitsplatzeinheit in einfacher Weise erfüllt werden und das entsprechende Strebenelement in einfacher Weise hergestellt werden. Alternativ ist es denkbar, dass linke bzw. rechte Strebenelement, das aus der vorderen Vertikalstrebe, der hintere Vertikalstrebe und der mindestens einen Längsstrebe gebildet ist, als Schraubkonstruktion auszuführen, bei der die Vertikalstreben und Längsstreben miteinander verschraubt sind, oder als Steckkonstruktion auszuführen, bei der die die Vertikalstreben und Längsstreben miteinander durch Steckverbindungen verbunden sind.

Gemäß einer bevorzugten Ausführungsform der Erfindung ist die Vorderwand mit dem linken tragenden Strebenelement und dem rechten tragenden Strebenelement jeweils mittels einer Schweißverbindung verbunden. Hierdurch können die mechanischen Anforderungen an Steifigkeit, Stabilität und Festigkeit der Fahrerarbeitsplatzeinheit in einfacher Weise erfüllt werden.

Gemäß einer bevorzugten Ausführungsform der Erfindung ist die vordere Querstrebe und/oder die hintere Querstrebe mit dem linken tragenden Strebenelement und dem rechten tragenden Strebenelement jeweils mittels einer Schraubverbindung oder einer Schweißverbindung verbunden. Hierdurch können die mechanischen Anforderungen an Steifigkeit, Stabilität und Festigkeit der Fahrerarbeitsplatzeinheit in einfacher Weise erfüllt werden.

Gemäß einer bevorzugten Ausführungsform der Erfindung ist das Querverbindungselement als Rohrprofil oder als Winkelprofil ausgebildet.

Gemäß einer bevorzugten Ausführungsform der Erfindung ist das nicht-tragende Verkleidungselement als Blechbauteil, insbesondere Blechplatte, oder als Kunststoffbauteil, insbesondere Kunststoffplatte, ausgebildet. Da das Verkleidungselement keine für die Steifigkeit, Stabilität und Festigkeit der Fahrerarbeitsplatzeinheit erforderlichen Kräfte aufnimmt und überträgt, kann das Verkleidungselement in kostengünstiger Bauweise als Blechbauteil, insbesondere als dünne Blechplatte, oder als Kunststoffbauteil, insbesondere Kunststoffplatte, ausgebildet sein.

Die Erfindung betrifft weiterhin einen Schubmaststapler umfassend ein Fahrzeugchassis, das Fahrwerksräder, einen Fahrantrieb und einen Lenkanrieb umfasst, und eine Fahrerarbeitsplatzeinheit nach einem der vorangegangenen Ansprüche, wobei die Fahrerarbeitsplatzeinheit an dem Fahrzeugchassis lösbar befestigbar ist.

Der Schubmaststapler weist die bereits zu der Fahrerarbeitsplatzeinheit genannten Vorteile auf.

Die Erfindung weist eine Reihe von Vorteilen auf.

Die tragende Strebenkonstruktion der Fahrerarbeitsplatzeinheit stellt eine Art "Skelett" dar, das aus Rohrprofilen und/oder Winkelprofilen gebildet ist. Diese tragende Strebenkonstruktion wird modular erweitert mit entsprechenden, an der tragenden Strebenkonstruktion lösbar befestigten nicht-tragenden Verkleidungselementen, die eine Varianz aufweisen können.

Die tragende Strebenkonstruktion ist mit dem linken Strebenelement, dem rechten Strebenelement und dem mindestens einen Querverbindungselementen in Segmente unterteilt, die jeweils eine Varianz aufweisen können, wodurch unterschiedliche Fahrerarbeitsplatzeinheiten in einfacher Weise zusammengestellt und hergestellt werden können.

Die Erfindung ermöglicht eine kostengünstige Herstellung der Fahrerarbeitsplatzeinheit.

Als Rohrprofile und/oder Winkelprofile, die für die tragende Strebenkonstruktion verwendet werden, können kostengünstige und marktübliche Standard-Profile verwendet werden.

Die erfindungsgemäße Fahrerarbeitsplatzeinheit kann in einfacher Weise derart ausgebildet werden, dass die mechanischen Anforderungen hinsichtlich Steifigkeit, Stabilität und Festigkeit der Fahrerarbeitsplatzeinheit erfüllt werden. Höhere Anforderungen, beispielsweise eine höhere Stabilität, ist leicht anpassbar durch stärkeres Rohrmaterial.

Die erfindungsgemäße Fahrerarbeitsplatzeinheit bietet in einfacher Weise eine hohe Flexibilität an verschiedenen Kunden-, Design- und Marktanforderungen.

Die erfindungsgemäße Fahrerarbeitsplatzeinheit ermöglicht weiterhin einen einfachen und kostengünstigen Austausch, beispielsweise nachträglichen Austausch, von Verkleidungselementen bzw. eine einfache und kostengünstige Reparatur beschädigter Verkleidungselemente, beispielsweise nach einem Unfall. Die erfindungsgemäße Fahrerarbeitsplatzeinheit ermöglicht somit einen einfachen nachträglichen modularen Umbau. Insbesondere bei Karosserieschäden ermöglicht der modulare Aufbau der Fahrerarbeitsplatzeinheit eine einfache Reparatur durch den Austausch beschädigter Verkleidungselemente.

Weitere Vorteile und Einzelheiten der Erfindung werden anhand der in den schematischen Figuren dargestellten Ausführungsbeispiele näher erläutert. Hierbei zeigen
- Figur 1: einen Schubmaststapler mit einer ersten Ausführungsform einer erfindungsgemäßen Fahrerarbeitsplatzeinheit in einer perspektivischen Heckansicht,
- Figur 2: den Schubmaststapler der Figur 1 in einer weiteren perspektivischen Heckansicht,
- Figur 3: die Fahrerarbeitsplatzeinheit der Figuren 1 und 2 in einer ersten perspektivischen Darstellung,
- Figur 4: die Fahrerarbeitsplatzeinheit der Figuren 1 und 2 in einer zweiten perspektivischen Darstellung,
- Figur 5: die Fahrerarbeitsplatzeinheit der Figuren 1 bis 4 in einer Explosionsdarstellung,
- Figur 6: eine zweite Ausführungsform einer erfindungsgemäßen Fahrerarbeitsplatzeinheit in einer perspektivischen Darstellung,
- Figur 7: die Fahrerarbeitsplatzeinheit der Figur 6 in einer Seitenansicht auf die linke Seitenwand,
- Figur 8: die Fahrerarbeitsplatzeinheit der Figuren 6 und 7 in einer Seitenansicht auf die rechte Seitenwand,
- Figur 9: die Fahrerarbeitsplatzeinheit der Figuren 6 bis 8 in einer Explosionsdarstellung,
- Figur 10: eine dritte Ausführungsform einer erfindungsgemäßen Fahrerarbeitsplatzeinheit in einer perspektivischen Darstellung,
- Figur 11: die Fahrerarbeitsplatzeinheit der Figur 10 in einer Seitenansicht auf die linke Seitenwand,
- Figur 12: die Fahrerarbeitsplatzeinheit der Figuren 10 und 11 in einer Seitenansicht auf die rechte Seitenwand,
- Figur 13: die Fahrerarbeitsplatzeinheit der Figuren 10 bis 12 in einer Explosionsdarstellung,
- Figur 14: eine Detailansicht der Fahrerarbeitsplatzeinheit der Figuren 10 bis 13,
- Figur 15: die Fahrerarbeitsplatzeinheit der Figuren 10 bis 15 ohne Darstellung der Verkleidungselemente,
- Figur 16: die Fahrerarbeitsplatzeinheit der Figur 15 mit montiertem Fahrerschutzdach und
- Figur 17: die Fahrerarbeitsplatzeinheit der Figuren 10 bis 16 in einer Explosionsdarstellung der tragenden Strebenkonstruktion.

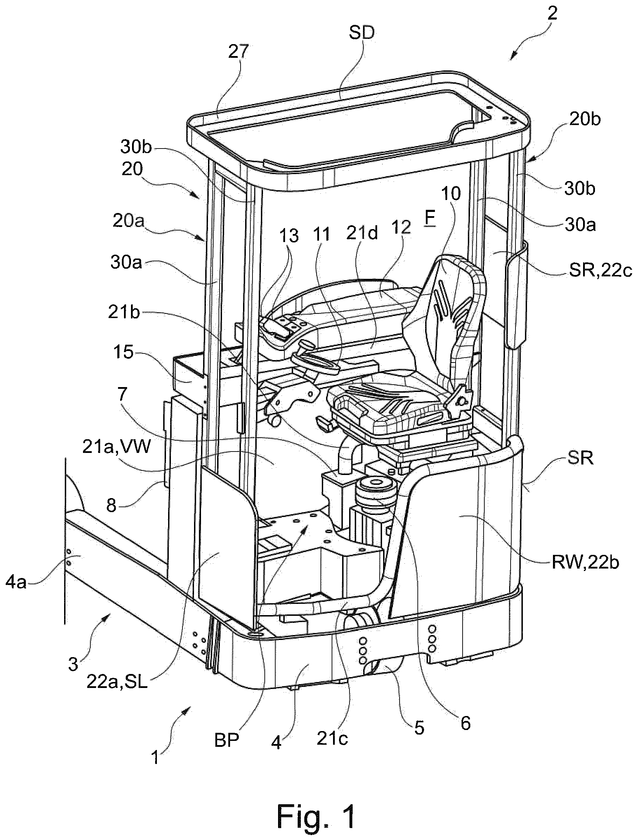

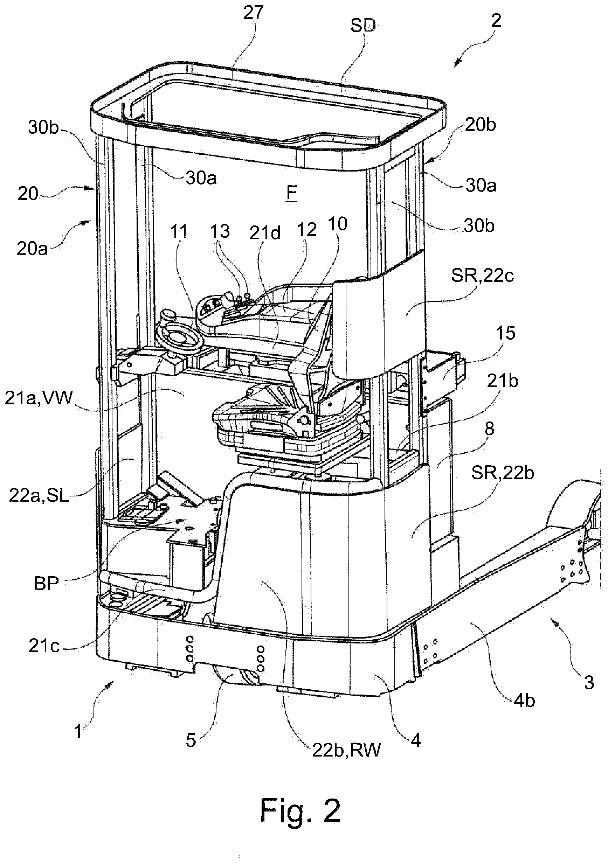

In den Figuren 1 und 2 ist ein Schubmaststapler 1 mit einer erfindungsgemäßen Fahrerarbeitsplatzeinheit 2 dargestellt.

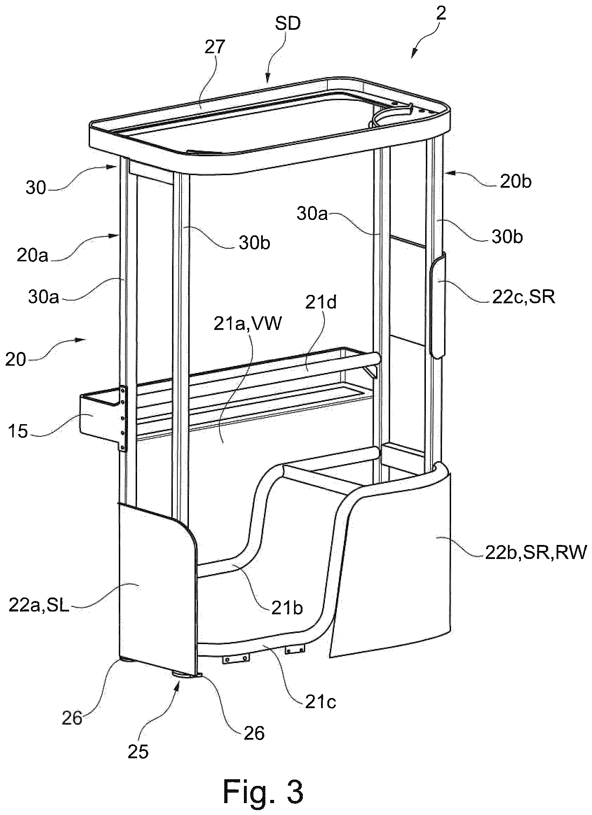

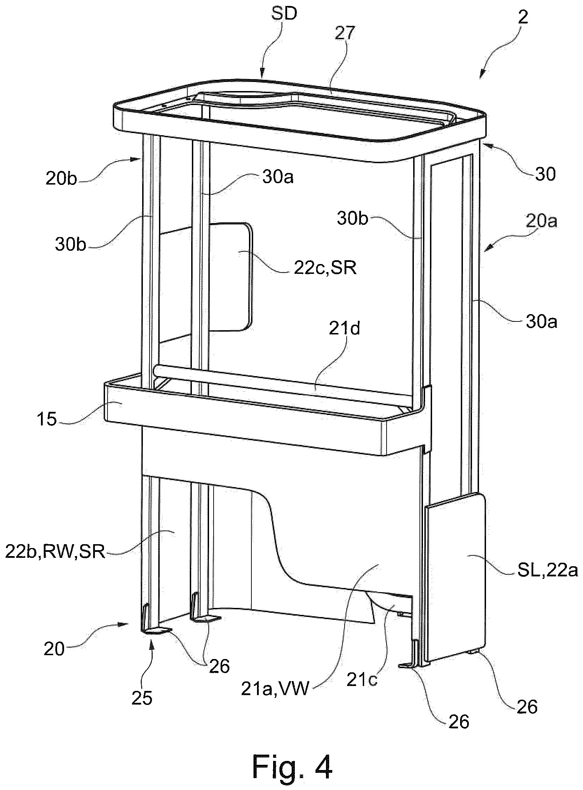

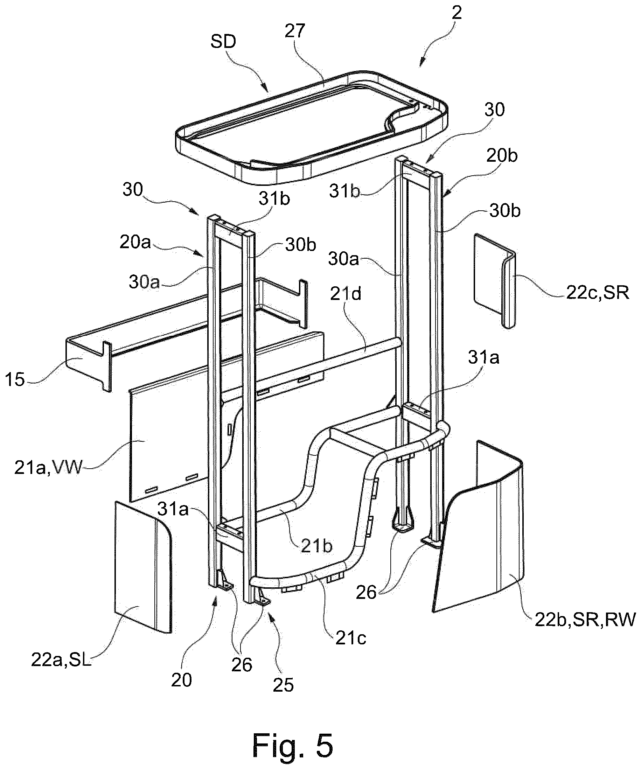

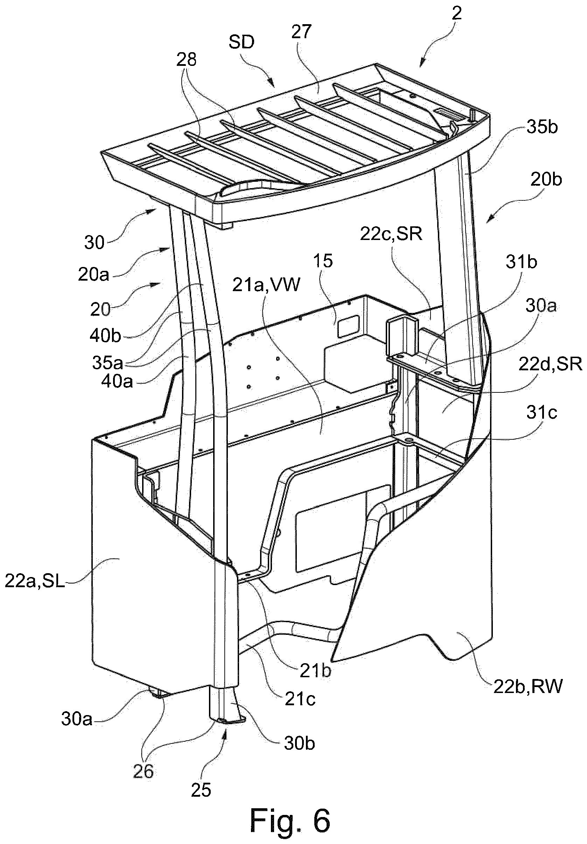

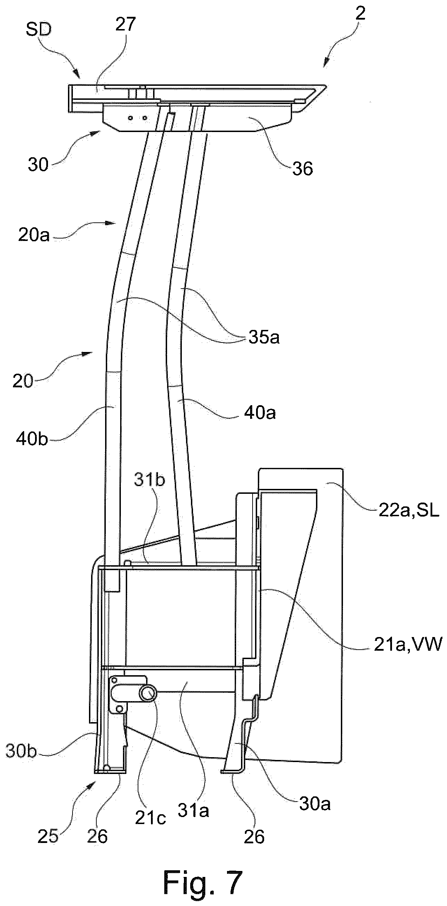

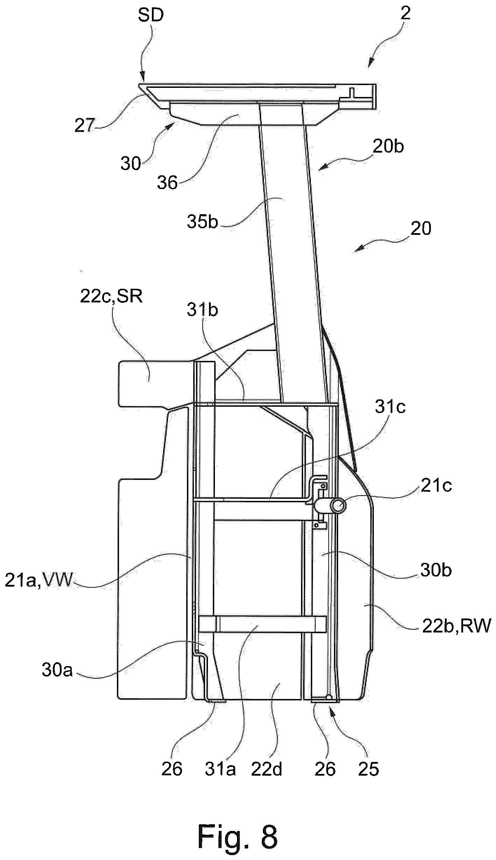

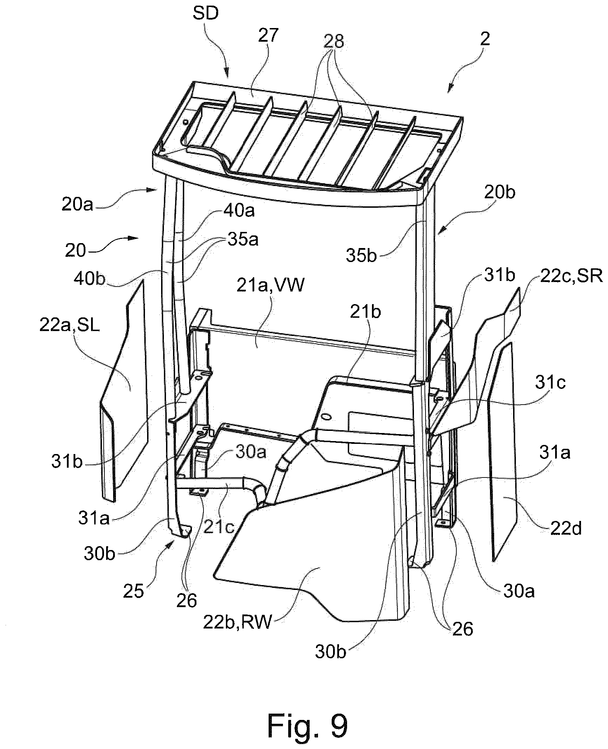

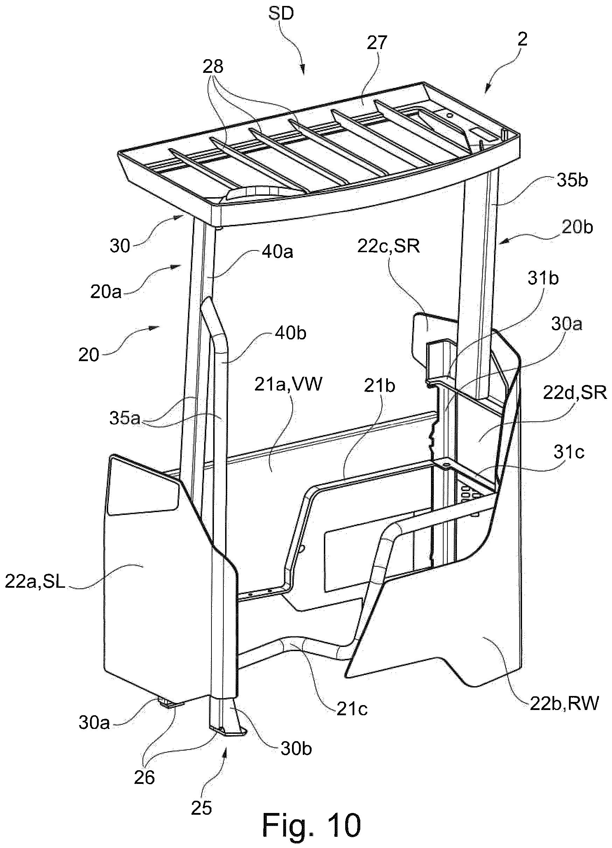

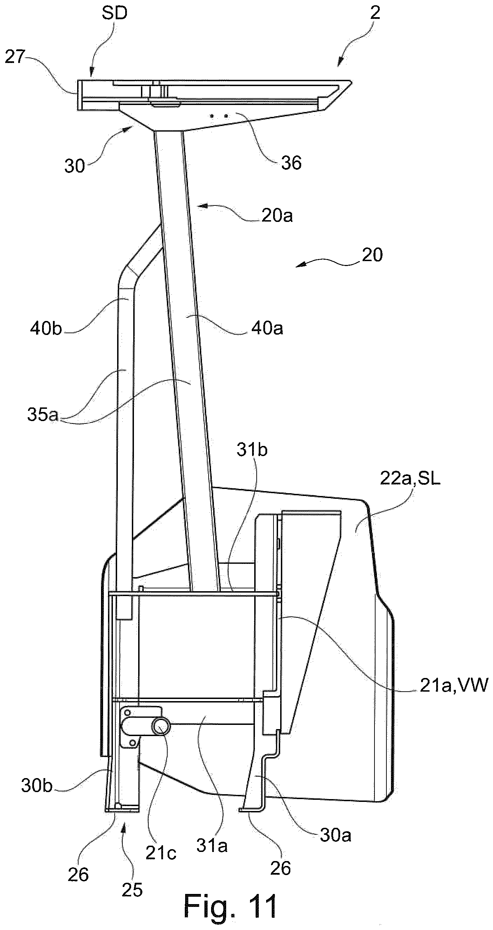

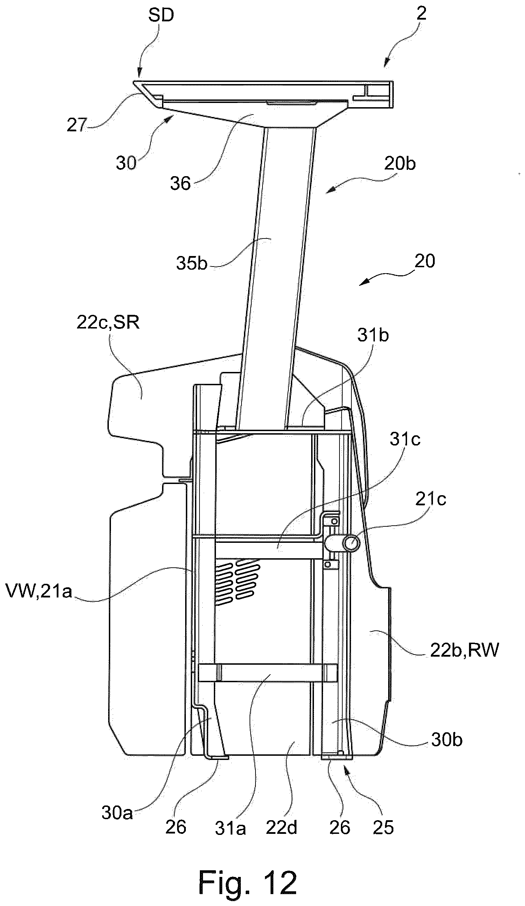

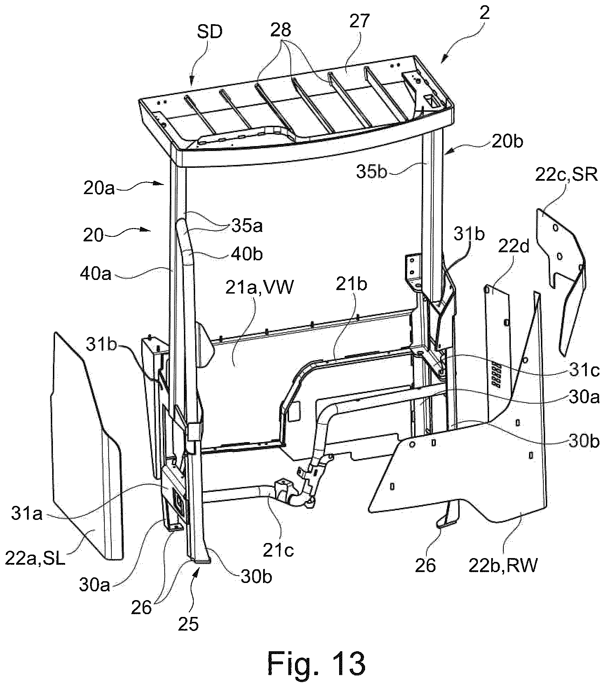

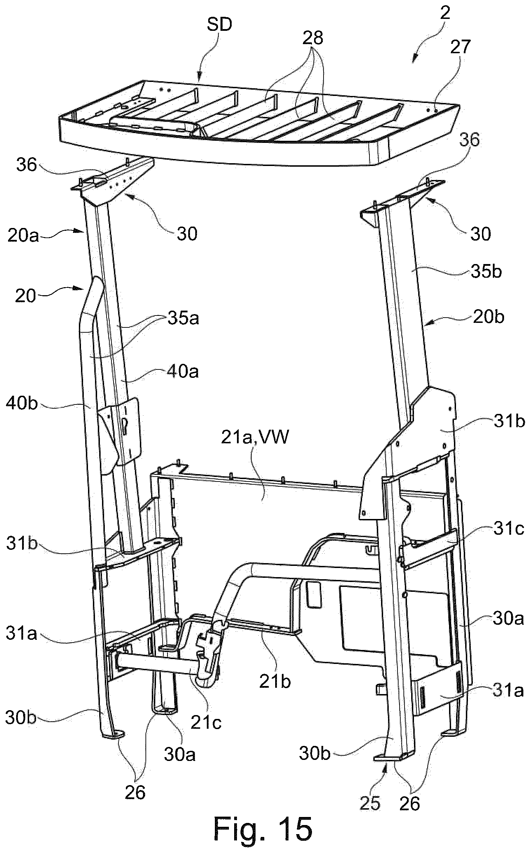

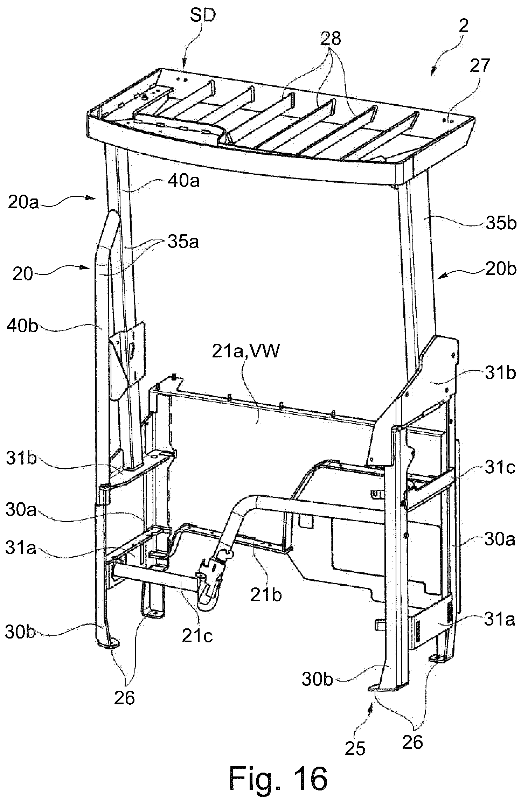

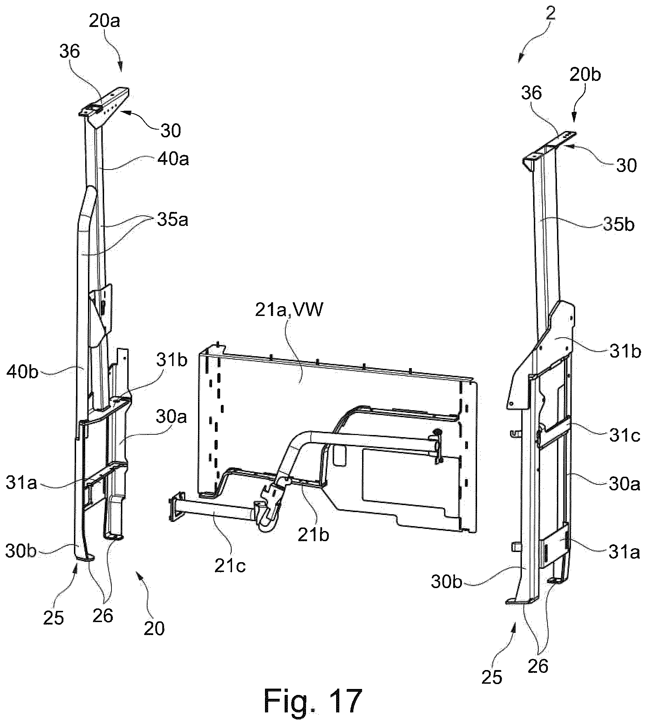

Die Figuren 3 bis 5 zeigen eine erste Ausführungsform der erfindungsgemäßen Fahrerarbeitsplatzeinheit 2. Die Figuren 6 bis 9 zeigen eine zweite Ausführungsform der erfindungsgemäßen Fahrerarbeitsplatzeinheit 2. Die Figuren 10 bis 17 zeigen eine dritte Ausführungsform der erfindungsgemäßen Fahrerarbeitsplatzeinheit 2.

In den Figuren 1 bis 17 sind gleiche Bauteile mit gleichen Bezugsziffern versehen.

Der Schubaststapler 1 der Figuren 1 und 2 weist ein Fahrzeugchassis 3 auf und die Fahrerarbeitsplatzeinheit 2 auf. Die Fahrerarbeitsplatzeinheit 2 ist an dem Fahrzeugchassis 3 wie später erläutert als separate Einheit lösbar befestigbar.

Das Fahrzeugchassis 3 weist einen in einer Draufsicht U-förmigen Fahrzeugrahmen 4 mit zwei seitlichen Radarmen 4a, 4b auf. Der Fahrzeugrahmen 4 ist mit Fahrwerkrädern versehen, die ein in Fahrzeugquerrichtung mittig angeordnetes, lenkbares Antriebsrad 5 und jeweils eine an den vorderen Endbereichen der Radarme 4a, 4b angeordnete, nicht näher dargestellte Laufrolle umfassen. Das Fahrzeugchassis 3 ist mit einem das Antriebsrad 5 antreibenden Fahrantrieb 6, beispielsweise einem elektrischen Fahrmotor, und einem das Antriebsrad 5 lenkenden Lenkanrieb 7 beispielsweise einem elektrischen Lenkmotor, versehen. Zwischen den beiden Radarmen 4a, 4b ist ein nicht näher dargestelltes Hubgerüst in Fahrzeuglängsrichtung verschiebbar angeordnet. Das Fahrzeugchassis 3 ist weiterhin mit einer Hydraulikanlage versehen, die ein elektrisches Pumpenaggregat umfasst und die hydraulischen Verbraucher des Hubgerüstes mit Druckmittel versorgt. Das Fahrzeugchassis 3 ist weiterhin mit einer nicht näher dargestellten Bremsanlage versehen, mit der der Schubmaststapler 1 abbremsbar ist. Weiterhin ist das Fahrzeugchassis 3 mit einer Traktionsbatterie 8 versehen, die den Fahrantrieb 6, den Lenkantrieb 7 und die Hydraulikanlage mit elektrischer Energie versorgt.

Die Fahrerarbeitsplatzeinheit 2 ist als separate Einheit auf das Fahrzeugchassis 3 aufgesetzt.

Die Fahrerarbeitsplatzeinheit 2 enthält einen Fahrerarbeitsplatz F. Die Fahrerarbeitsplatzeinheit 2 ist an der linken Fahrzeugaußenseite von einer linken Seitenwand SL begrenzt. Die Fahrerarbeitsplatzeinheit 2 ist an der rechten Fahrzeugaußenseite von mindestens einer rechen Seitenwand SR begrenzt. Die Fahrerarbeitsplatzeinheit 2 ist nach Vorne in Richtung zur Traktionsbatterie 8 von einer Vorderwand VW begrenzt. Die Fahrerarbeitsplatzeinheit 2 ist nach Hinten von einer Rückwand RW begrenzt. Die Rückwand RW erstreckt sich im dargestellten Ausführungsbeispiel über die rechte Fahrzeughälfte, wodurch an der linken Fahrzeughälfte am Fahrzeugheck eine Einstiegsöffnung ausgebildet ist, die dem Fahrer einen Ein- und Ausstieg in den Fahrerarbeitsplatz F ermöglicht. Die Fahrerarbeitsplatzeinheit 2 ist nach vertikal oben von einem Fahrerschutzdach SD begrenzt, das den im Fahrerarbeitsplatz F befindlichen Fahrer vor herabfallenden Teilen schützt. Die Fahrerarbeitsplatzeinheit 2 ist nach vertikal unten in der linken Fahrzeughälfte von einer Bodenplatte BP begrenzt, die mit Pedalen versehen sein kann, beispielsweise Fahrpedalen und/oder einem Bremspedal.

In der Fahrerarbeitsplatzeinheit 2 ist ein Fahrersitz 10 angeordnet. Im dargestellten Ausführungsbeispiel ist der Fahrersitz 10 in der rechte Fahrzeughälfte angeordnet. Unterhalb des Fahrersitzes 10 sind der Fahrantrieb 6 und der Lenkanrieb 7 angeordnet.

In der Fahrerarbeitsplatzeinheit 2 ist weiterhin eine Lenkbedieneinheit 11 angeordnet. Im dargestellten Ausführungsbeispiel ist die Lenkbedieneinheit 11 von einem Lenkrad gebildet.

In der Fahrerarbeitsplatzeinheit 2 ist weiterhin eine Armauflage 12 angeordnet, beispielsweise eine Armlehne, die mit Bedienelementen 13, beispielsweise als Joysticks ausgebildeten Bedienhebel, versehen ist.

Die Fahrerarbeitsplatzeinheit 2 ist weiterhin mit einem Elektronikhalter 15 versehen. Der Elektronikhalter 15 ist im dargestellten Ausführungsbeispiel von einer wannenartigen Aufnahme gebildet, die an der Vorderseite der Fahrerarbeitsplatzeinheit 2 in vertikaler Richtung oberhalb der Traktionsbatterie 5 angeordnet ist und einen Einbauraum für elektrische und/oder elektronische Komponenten des Schubmaststaplers 1 darstellt.

Wie in Verbindung mit den Figuren 3 bis 17 dargestellt ist, weist die Fahrerarbeitsplatzeinheit 2 eine tragende Strebenkonstruktion 20 auf Die tragende Strebenkonstruktion 20 umfasst ein linkes tragendes Strebenelement 20a und ein rechtes tragendes Strebenelement 20b und mindestens ein, das linke Strebenelement 20a und das rechte Strebenelement 20b verbindendes tragendes Querverbindungselement 21a, 21b, 21c, 21d. An der tragenden Strebenkonstruktion 20 ist mindestens ein nicht-tragendes Verkleidungselement 22a, 22b, 22c, 22d lösbar befestigt.

Die tragende Strebenkonstruktion 20 mit einer Befestigungsschnittstelle 25 versehen, mittels der die Fahrerarbeitsplatzeinheit 2 an dem Fahrzeugchassis 3 des Schubmaststaplers 1 lösbar befestigbar ist. In den dargestellten Ausführungsbeispielen sind an den vertikal unteren Endbereich des linken Strebenelements 20a und des rechten Strebenelements 20b entsprechende die Befestigungsschnittstelle 25 bildende Flanschplatten 26 für Befestigungsverschraubungen angeordnet.

Das Verkleidungselement 22a ist in den dargestellten Ausführungsbeispielen als linke Seitenwand SL ausgebildet.

In dem Ausführungsbeispiel der Figuren 3 bis 5 ist das Verkleidungselement 22b als rechte Seitenwand SR und als Rückwand RW ausgebildet.

In den Ausführungsbeispielen der Figuren 6 bis 17 ist das Verkleidungselement 22b als Rückwand RW ausgebildet und das Verkleidungselement 22d als rechte Seitenwand SR ausgebildet.

In den Ausführungsbeispielen der Figuren 3 bis 17 ist das Verkleidungselement 22c als weitere rechte Seitenwand SR ausgebildet, die vertikal oberhalb des Verkleidungselements 22b bzw. 22d angeordnet ist.

In den Ausführungsbeispielen der Figuren 3 bis 17 ist das Querverbindungselement 21a als Vorderwand VW ausgebildet. Die Vorderwand VW ist bevorzugt von einer Blechplatte gebildet.

In den Ausführungsbeispielen der Figuren 3 bis 17 ist das Querverbindungselement 21b als vordere Querstrebe ausgebildet und das Querverbindungselement 21c als hintere Querstrebe ausgebildet.

Die Querverbindungselemente 21a, 21b weisen jeweils in der linken Fahrzeughälfte einen in vertikaler Richtung tiefer liegenden Abschnitt auf, an dem die Bodenplatte BP angeordnet ist, und in der rechten Fahrzeughälfte einen in vertikaler Richtung höher liegenden Abschnitt auf, an dem der Fahrersitz 10 angeordnet ist.

In dem Ausführungsbeispiel der Figuren 3 bis 5 ist ein weiteres Querverbindungselement 21d vorgesehen, das als weitere vordere Querstrebe ausgebildet ist und in vertikaler Richtung oberhalb der von dem Querverbindungselement 21b gebildeten vorderen Querstrebe angeordnet ist.

Die tragende Strebenkonstruktion 20 ist mit entsprechenden Befestigungsschnittstellen versehen ist, an denen der Fahrersitz 10, die Lenkbedieneinheit 11, die Armauflage 12 mit den Bedienelementen 13, die Bodenplatte BP, der Elektronikhalter 15 und ein gegebenenfalls vorhandene Anzeigeelement, beispielsweise ein Anzeigedisplay befestigt sind.

Die tragende Strebenkonstruktion 20 ist mit dem Fahrerschutzdach SD versehen.

In den Figuren 1 bis 5 ist eine erste Ausführungsform des Fahrerschutzdaches SD dargestellt, gemäß der das Fahrerschutzdach SD als Glasdach ausgebildet ist. Das als Glasdach ausgeführte Fahrerschutzdach SD weist eine umlaufenden Metallrahmen 27 auf, in den eine nicht näher dargestellte Glasscheibe montiert werden kann.

In den Figuren 6 bis 17 ist eine zweite Ausführungsform des Fahrerschutzdaches SD dargestellt, gemäß der das Fahrerschutzdach SD als Strebendach ausgebildet ist. Das als Strebendach ausgeführte Fahrerschutzdach SD weist eine umlaufenden Metallrahmen 27 auf, der mit in Fahrzeuglängsrichtung verlaufenden Metallstreben 28 versehen ist.

Das linke Strebenelement 20a und das rechte Strebenelement 20b sind im vertikal oberen Bereich jeweils mit einer Befestigungsschnittstelle 30 versehen, mittel der das Fahrerschutzdach SD an den Strebenelementen 20a, 20b lösbar befestigt ist, beispielsweise mittels Befestigungsverschraubungen.

Das linke tragende Strebenelement 20a umfasst eine vordere Vertikalstrebe 30a und eine hintere Vertikalstrebe 30b, die mittels mindestens einer Längsstrebe 31a, 31b miteinander verbunden sind. Die Längsstrebe 31a, 31b sind in vertikaler Richtung voneinander beabstandet angeordnet.

Das rechte tragende Strebenelement 20b umfasst - analog zum linken tragenden Strebenelement 20a - eine vordere Vertikalstrebe 30a und eine hintere Vertikalstrebe 30b, die mittels mindestens einer Längsstrebe 31a, 31b miteinander verbunden sind. Die Längsstrebe 31a, 31b sind in vertikaler Richtung voneinander beabstandet angeordnet.

In dem Ausführungsbeispiel der Figuren 3 bis 5 sind die vordere Vertikalstrebe 30a und eine hintere Vertikalstrebe 30b der beiden Strebenelemente 20a, 20b jeweils als Rohrprofil, beispielsweise als Rechteckrohr, ausgebildet.

In dem Ausführungsbeispiel der Figuren 3 bis 5 sind die Längsstreben 31a, 31b der beiden Strebenelemente 20a, 20b jeweils als Rohrprofil, beispielsweise als Rechteckrohr, ausgebildet.

In dem Ausführungsbeispiel der Figuren 3 bis 5 erstrecken sich die Vertikalstreben 30a, 30b der beiden Strebenelemente 20a, 20b jeweils nach vertikal oben bis in den Bereich des Fahrerschutzdaches SD. In dem Ausführungsbeispiel der Figuren 3 bis 5 ist die Längsstrebe 31b im oberen Bereich des entsprechenden Strebenelements 20a, 20b angeordnet und bildet eine obere Längsstrebe 31b, die jeweils die vordere Vertikalstrebe 30a und die hintere Vertikalstrebe 30b des entsprechenden Strebenelements 20a, 20b verbindet.

In dem Ausführungsbeispiel der Figuren 3 bis 5 ist die obere Längsstrebe 31b des linken Strebenelemente 20a und die die obere Längsstrebe 31b des rechten Strebenelements 20b jeweils mit der Befestigungsschnittstelle 30 versehen, mittel der das Fahrerschutzdach SD an den Strebenelementen 20a, 20b lösbar befestigt ist. Die Befestigungsschnittstelle 30 kann von entsprechenden Aufnahmebohrungen für Befestigungsschrauben gebildet sein, mittels denen das Fahrerschutzdach SD, das als Glasdach oder als Strebendach ausgebildet sein kann, an den beiden oberen Längsstreben 31b lösbar befestigt ist.

In den Ausführungsbeispielen der Figuren 6 bis 17 sind die vordere Vertikalstrebe 30a und eine hintere Vertikalstrebe 30b der beiden Strebenelemente 20a, 20b jeweils als Winkelprofil ausgebildet.

In den Ausführungsbeispielen der Figuren 6 bis 17 sind die Längsstreben 31a, 31b der beiden Strebenelemente 20a, 20b jeweils als Winkelprofil ausgebildet.

In den Ausführungsbeispielen der Figuren 6 bis 17 erstrecken sich die Vertikalstreben 30a, 30b der beiden Strebenelemente 20a, 20b jeweils nach vertikal bis in den Bereich des Elektronikhalters 15. In dem Ausführungsbeispiel der Figuren 10 bis 17 ist der Elektronikhalter 15, der im Aufbau dem Elektronikhalter 15 der Figuren 6 bis 9 entspricht, nicht näher dargestellt. In dem Ausführungsbeispiel der Figuren 6 bis 17 ist die Längsstrebe 31b im oberen Bereich des entsprechenden Strebenelements 20a, 20b angeordnet und bildet eine obere Längsstrebe 31b, die jeweils die vordere Vertikalstrebe 30a und die hintere Vertikalstrebe 30b des entsprechenden Strebenelements 20a, 20b verbindet.

In den Ausführungsbeispielen der Figuren 6 bis 17 umfasst das linke tragende Strebenelement 20a und das rechte tragende Strebenelement 20b jeweils ein sich nach vertikal oben erstreckendes Tragelement 35a, 35b, das an der oberen Längsstrebe 31b befestigt ist, wobei das Tragelement 35a, 35b im vertikal oberen Bereich mit der Befestigungsschnittstelle 30 versehen ist, mittel der das Fahrerschutzdach SD an den Strebenelementen 20a, 20b lösbar befestigt ist.

Die Befestigungsschnittstelle 30 ist bevorzugt jeweils von einer an dem oberen Ende des Tragelements 35a, 35b angeordnete Flanschplatte 36 gebildet, die mit entsprechenden Aufnahmebohrungen für Befestigungsschrauben versehen ist, mittels denen das Fahrerschutzdach SD, das als Glasdach oder als Strebendach ausgebildet sein kann, an den Flanschplatten 36 lösbar befestigt ist.

In den Ausführungsbeispielen der Figuren 6 bis 17 weisen die Strebenelemente 20a, 20b einen modularen Aufbau auf, die sich hinsichtlich der Ausführung der Tragelemente 35a, 35b unterscheiden.

In dem Ausführungsbeispiel der Figuren 6 bis 9 ist das Tragelement 35a des linken Strebenelements 20a von zwei Tragrohren 40a, 40b gebildet. Die Tragrohre 40a, 40b sind bevorzugt jeweils als Rohrprofile mit einem Kreisquerschnitt ausgebildet. Das Tragelement 35b des rechten Strebenelements 20b ist nach Vorne geneigt angeordnet. Das Tragelement 35b des rechten Strebenelements 20b ist bevorzugt von einem Rohrprofil mit einem Rechteckquerschnitt gebildet.

In dem Ausführungsbeispiel der Figuren 10 bis 17 ist das Tragelement 35a des linken Strebenelements 20a von zwei Tragrohren 40a, 40b gebildet. Die Tragrohre 40a, 40b sind bevorzugt als Rohrprofile ausgebildet, wobei das Tragrohr 40a einen Rechteckquerschnitt aufweist und das Tragrohr 40b einen Kreisquerschnitt aufweist. Das Tragelement 35b des rechten Strebenelements 20b ist nach Hinten geneigt angeordnet. Das Tragelement 35b des rechten Strebenelements 20b ist bevorzugt von einem Rohrprofil mit einem Rechteckquerschnitt gebildet.

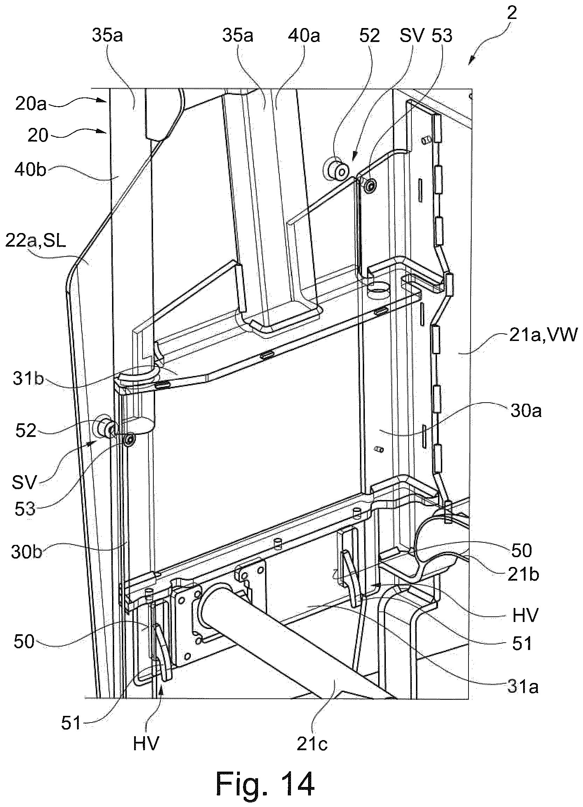

In der Figur 14 ist eine Ausführungsform der lösbaren Befestigung eines nicht-tragenden Verkleidungselement 22a, 22b, 22c, 22d an einem Strebenelement 20a bzw. 20b dargestellt. Die Figur 14 zeigt die Befestigung des die linke Seitenwand SL bildenden nicht-tragenden Verkleidungselement 22a an dem linken Strebenelement 20a.

Im dargestellten Ausführungsbeispiel ist eine Kombination aus mindestens einer Schraubverbindung SV und/oder mindestens einer Hakenverbindung HV zur Befestigung des Verkleidungselements 22a an dem Strebenelement 20a vorgesehen.

Die Hakenverbindung HV umfasst in dem Strebenelement 20a mindestens eine schlitzförmigen Ausnehmung 50, die im dargestellten Ausführungsbeispiel vertikal angeordnet ist, und in die ein an der Innenseite des Verkleidungselements 22a angebrachter Befestigungshaken 51 formschlüssig einführbar ist. Im dargestellten Ausführungsbeispiel sind die schlitzförmigen Ausnehmung 50 an der unteren Längsstrebe 31a des Strebenelements 20a ausgebildet.

Die Schraubverbindung SV umfasst ein oder mehrere Gewindebuchsen 52, die an der Innenseite des Verkleidungselements 22a angeordnet sind und in die Gewindeschrauben 53, die in Aufnahmebohrungen des Strebenelements 20a angeordnet sind, zur Befestigung des Verkleidungselements 22a an dem Strebenelement 20a eingeschraubt werden können.

Die anderen Verkleidungselement 22b, 22c, 22d, 22e können in entsprechender Weise an der Strebenkonstruktion 20 befestigt werden.

In den Ausführungsbeispielen der Figuren 3 bis 17 sind das linke tragende Strebenelement 20a und das rechte tragende Strebenelement 20b jeweils als Schweißkonstruktion ausgebildet ist.

Hierzu sind die vordere Vertikalstrebe 30a, die hintere Vertikalstrebe 30b und die Längsstreben 31a, 31b miteinander verschweißt.

In den Ausführungsbeispielen der Figuren 6 bis 17 ist das rechte tragende Strebenelement 20b zusätzlich zu der unteren Längsstrebe 31a und der oberen Längsstrebe B mit einer in vertikaler Richtung zwischen den Längsstreben 31a, 31b angeordneten mittleren Längsstrebe 31c versehen, die ebenfalls mit der vorderen Vertikalstrebe 30a und der hinteren Vertikalstrebe 30b verschweißt ist.

In den Ausführungsbeispielen der Figuren 6 bis 17 ist weiterhin an dem linken tragenden Strebenelement 20a das Tragelement 35a und an dem rechten tragenden Strebenelement 20b das Tragelement 35b verschweißt, wobei an den oberen Enden der Tragelementen 35a, 35b jeweils eine Flanschplatte 36 angeschweißt ist.

In den Ausführungsbeispielen der Figuren 3 bis 17 ist das die Vorderwand VW bildende Querverbindungselement 21a ist mit dem linken tragenden Strebenelement 20a und dem rechten tragenden Strebenelement 20b jeweils mittels einer Schweißverbindung verbunden ist.

In den Ausführungsbeispiel der Figuren 3 bis 5 sind die Querverbindungselement 21b, 21c, 21d mit dem linken tragenden Strebenelement 20a und dem rechten tragenden Strebenelement 20b jeweils mittels einer Schweißverbindung verbunden.

In dem Ausführungsbeispiel der Figuren 3 bis 5 sind die Querverbindungselemente 21b, 21c, 21d jeweils als Rohrprofil ausgebildet.

In den Ausführungsbeispielen der Figuren 6 bis 17 ist das Querverbindungselement 21b als Winkelprofil oder Flachstahl ausgebildet, das mit dem linken tragenden Strebenelement 20a und dem rechten tragenden Strebenelement 20b sowie mit dem die Vorderwand VW bildenden Querverbindungselement 21a jeweils mittels einer Schweißverbindung verbunden ist.

In den Ausführungsbeispielen der Figuren 6 bis 17 ist das Querverbindungselement 21c mit dem linken tragenden Strebenelement 20a und dem rechten tragenden Strebenelement 20b jeweils mittels einer Schraubverbindung verbunden.

Das Querverbindungselement 21c der Figuren 6 bis 17 ist als Rohrprofil ausgebildet.

In den Ausführungsbeispielen der Figuren 1 bis 17 sind die Verkleidungselement 22a, 22b, 22c, 22d als Blechbauteil, beispielsweise als dünne Blechplatte, oder alternativ als Kunststoffbauteil, beispielsweise als Kunststoffplatte, ausgebildet.

In dem Ausführungsbeispiel der Figuren 6 bis 9 und in dem Ausführungsbeispiel der Figuren 10 bis 17 unterscheiden sich die Verkleidungselement 22a, 22b, 22c, 22d weiterhin hinsichtlich der Form, des Zuschnitts und/oder der Farbe.

In dem Ausführungsbeispiel der Figuren 6 bis 9 und in dem Ausführungsbeispiel der Figuren 10 bis 17 sind die Befestigungspunkte der Verkleidungselement 22a, 22b, 22c, 22d bevorzugt an denselben Stellen ausgebildet.

Der Elektronikhalter 15 ist in den Ausführungsbeispielen der Figuren 1 bis 17 bevorzugt an dem linken tragenden Strebenelement 20a, an dem rechten tragenden Strebenelement 20b sowie an dem mit den beiden Strebenelementen 20a, 20b verbundenen, die Vorderwand VW bildenden Querverbindungselement 21a mittels Schraubverbindungen als Befestigungsschnittstelle befestigt.

In den Ausführungsbeispielen der Figuren 1 bis 17 ist der Fahrersitz 10 an den Querverbindungselementen 21b, 21c befestigt, die mit entsprechenden Befestigungsschnittstellen, beispielsweise für Befestigungsschrauben, versehen sind.

In den Ausführungsbeispielen der Figuren 1 bis 17 ist die Bodenplatte BP an den Querverbindungselementen 21b, 21c befestigt, die mit entsprechenden Befestigungsschnittstellen, beispielsweise für Befestigungsschrauben, versehen sind.

Wie aus den Figuren 3 bis 17 ersichtlich ist, weist die tragende Strebenkonstruktion 20 einen modularen Aufbau auf und ist aus den beiden Strebenelementen 20a, 20b und den Querverbindungselementen 21a, 21b, 21c bzw. 21d zusammengesetzt.

Bevorzugt sind in den Ausführungsbeispielen der Figuren 6 bis und 10 bis 17 die Querverbindungselementen 21a, 21b, 21c als Gleichteile ausgebildet.

In den Ausführungsbeispielen der Figuren 6 bis 9 und 10 bis 17 gleichen sich bevorzugt das linke Strebenelement 20a und das rechte Strebenelement 20b bis auf die unterschiedlichen Tragelemente 35a bzw. 35b. Das linke Strebenelement 20a und das rechte Strebenelement 20b kann somit - abgesehen von den unterschiedlichen Tragelemente 35a bzw. 35b - aus Gleichteilen zusammengesetzt werden, wobei bevorzugt die Vertikalstützen 30a, 30b und die Längsstrebe 31a, 31b der linke Strebenelemente 20a der Figuren 6 bis 9 und 10 bis 17 als Gleichteile ausgebildet sind und wobei bevorzugt die Vertikalstützen 30a, 30b und die Längsstrebe 31a, 31b, 31c der rechten Strebenelemente 20a der Figuren 6 bis 9 und 10 bis 17 als Gleichteile ausgebildet sind. Die Strebenelemente 20a, 20b ermöglichen somit in einfacher Weise durch unterschiedliche Tragelemente 35a, 35b eine Varianz und Modularität.

Die modulare und tragende Strebenkonstruktion 20 der Figuren 3 bis 17 kann in modularer Weise mit verschiedenen Fahrerschutzdächern FD, beispielsweise einem Strebendach oder einem Glasdach, versehen werden.

An der modular aufgebauten, tragenden Strebenkonstruktion 20 der Figuren 3 bis 17 können zudem in einfacher Weise unterschiedliche nicht-tragende Verkleidungselemente 22a, 22b, 22c, 22d lösbar befestigt werden, die sich hinsichtlich Form und/oder Zuschnitt und/oder Farbe unterscheiden können.

## Patentansprüche

1. Fahrerarbeitsplatzeinheit (2) für einen Schubmaststapler (1), wobei die Fahrerarbeitsplatzeinheit (2) einen Fahrerarbeitsplatz (F) enthält, **dadurch gekennzeichnet, dass** die Fahrerarbeitsplatzeinheit (2) eine tragende Strebenkonstruktion (20) aufweist, die ein linkes tragendes Strebenelement (20a) und ein rechtes tragendes Strebenelement (20b) und mindestens ein, das linke Strebenelement (20a) und das rechte Strebenelement (20b) verbindendes tragendes Querverbindungselement (21a; 21b; 21c; 21d) umfasst, wobei an der tragenden Strebenkonstruktion (20) mindestens ein nicht-tragendes Verkleidungselement (22a; 22b; 22c; 22d) lösbar befestigt ist.

2. Fahrerarbeitsplatzeinheit nach Anspruch 1, **dadurch gekennzeichnet, dass** die tragende Strebenkonstruktion (20) mit einer Befestigungsschnittstelle (25) versehen ist, mittels der die Fahrerarbeitsplatzeinheit (2) an einem Fahrzeugchassis (3) des Schubmaststaplers (1) lösbar befestigbar ist.

3. Fahrerarbeitsplatzeinheit nach Anspruch 1 oder 2, **dadurch gekennzeichnet, dass** das Verkleidungselement (22a; 22b; 22c; 22d) als linke Seitenwand (SL) und/oder als rechte Seitenwand (SR) und/oder als Rückwand (RW) der Fahrerarbeitsplatzeinheit (2) ausgebildet ist.

4. Fahrerarbeitsplatzeinheit nach einem der Ansprüche 1 bis 3, **dadurch gekennzeichnet, dass** das Querverbindungselement (21a) als Vorderwand (VW) ausgebildet ist.

5. Fahrerarbeitsplatzeinheit nach einem der Ansprüche 1 bis 4, **dadurch gekennzeichnet, dass** das Querverbindungselement (21a; 21b; 21c; 21d) als vordere Querstrebe und/oder als hintere Querstrebe ausgebildet ist.

6. Fahrerarbeitsplatzeinheit nach einem der Ansprüche 1 bis 5, **dadurch gekennzeichnet, dass** das Verkleidungselement (22a; 22b; 22c; 22d) mittels mindestens einer Schraubverbindung (SV) und/oder mittels mindestens einer Clips-Verbindung und/oder mittels mindestens einer Hakenverbindung (HV) an der tragenden Strebenkonstruktion (20) lösbar befestigt ist.

7. Fahrerarbeitsplatzeinheit nach einem der Ansprüche 1 bis 6, **dadurch gekennzeichnet, dass** die tragende Strebenkonstruktion (20) mit Befestigungsschnittstellen versehen ist, an denen mindestens eine der folgenden Komponenten befestigt ist:
• Fahrersitz (10)
• Lenkbedieneinheit (11)
• Armauflage (12)
• Bodenplatte (BP)
• Bedienelemente (13)
• Anzeigeelement
• Elektronikhalter

8. Fahrerarbeitsplatzeinheit nach einem der Ansprüche 1 bis 7, **dadurch gekennzeichnet, dass** die tragende Strebenkonstruktion (20) mit dem Fahrerschutzdach (SD) versehen ist.

9. Fahrerarbeitsplatzeinheit nach Anspruch 8, **dadurch gekennzeichnet, dass** das linke Strebenelement (20a) und das rechte Strebenelement (20b) im vertikal oberen Bereich jeweils mit einer Befestigungsschnittstelle (30) versehen sind, mittel der das Fahrerschutzdach (SD) an den Strebenelementen (20a, 20b) lösbar befestigt ist.

10. Fahrerarbeitsplatzeinheit nach einem der Ansprüche 1 bis 9, **dadurch gekennzeichnet, dass** das linke tragende Strebenelement (20a) und das rechte tragende Strebenelement (20b) jeweils eine vordere Vertikalstrebe (30a) und eine hintere Vertikalstrebe (30b) umfassen, die mittels mindestens einer Längsstrebe (31a; 31b; 31c) miteinander verbunden sind.

11. Fahrerarbeitsplatzeinheit nach Anspruch 10, **dadurch gekennzeichnet, dass** die vordere Vertikalstrebe (30a) und die hintere Vertikalstrebe (30b) des rechten Strebenelements (20a) und des linken Strebenelements (20b) im vertikal oberen Bereich mittels einer oberen Längsstrebe (31b) miteinander verbunden sind, wobei die obere Längsstrebe (31b) mit der Befestigungsschnittstelle (30) versehen ist, mittel der das Fahrerschutzdach (SD) an den Strebenelementen (20a, 20b) lösbar befestigt ist.

12. Fahrerarbeitsplatzeinheit nach Anspruch 10, **dadurch gekennzeichnet, dass** die vordere Vertikalstrebe (30a) und die hintere Vertikalstrebe (30b) des rechten Strebenelements (20b) und des linken Strebenelements (20a) im oberen Bereich mittels einer oberen Längsstrebe (31b) miteinander verbunden sind, wobei das linke tragende Strebenelement (20a) und das rechte tragende Strebenelement (20b) jeweils ein Tragelement (35a; 35b) umfassen, das an der oberen Längsstrebe (31b) befestigt ist, wobei das Tragelement (35a; 35b) im vertikal oberen Bereich mit der Befestigungsschnittstelle (30) versehen ist, mittel der das Fahrerschutzdach (SD) an den Strebenelementen (20a, 20b) lösbar befestigt ist.

13. Fahrerarbeitsplatzeinheit nach Anspruch 12, **dadurch gekennzeichnet, dass** das Tragelement (35a; 35b) als Rohrprofil ausgebildet ist.

14. Fahrerarbeitsplatzeinheit nach einem der Ansprüche 10 bis 13, **dadurch gekennzeichnet, dass** die Vertikalstrebe (30a; 30b) als Rohrprofil oder als Winkelprofil ausgebildet ist.

15. Fahrerarbeitsplatzeinheit nach einem der Ansprüche 10 bis 14, **dadurch gekennzeichnet, dass** die Längsstrebe (31a; 31b; 31c) als Rohrprofil oder als Winkelprofil ausgebildet ist.

16. Fahrerarbeitsplatzeinheit nach einem der Ansprüche 1 bis 15, **dadurch gekennzeichnet, dass** das linke tragende Strebenelement (20a) und das rechte tragende Strebenelement (20b) jeweils als Schweißkonstruktion ausgebildet ist.

17. Fahrerarbeitsplatzeinheit nach einem der Ansprüche 4 bis 16, **dadurch gekennzeichnet, dass** die Vorderwand (VW) mit dem linken tragenden Strebenelement (20a) und dem rechten tragenden Strebenelement (20b) jeweils mittels einer Schweißverbindung verbunden ist.

18. Fahrerarbeitsplatzeinheit nach einem der Ansprüche 5 bis 17, **dadurch gekennzeichnet, dass** die vordere Querstrebe (21a; 21b; 21d) und/oder die hintere Querstrebe (21b) mit dem linken tragenden Strebenelement (20a) und dem rechten tragenden Strebenelement (20b) jeweils mittels einer Schraubverbindung oder einer Schweißverbindung verbunden ist.

19. Fahrerarbeitsplatzeinheit nach einem der Ansprüche 1 bis 18, **dadurch gekennzeichnet, dass** das Querverbindungselement (21a; 21b; 21c; 21d) als Rohrprofil oder als Winkelprofil ausgebildet ist.

20. Fahrerarbeitsplatzeinheit nach einem der Ansprüche 1 bis 19, **dadurch gekennzeichnet, dass** das Verkleidungselement (22a; 22b; 22c; 22d) als Blechbauteil, insbesondere Blechplatte, oder als Kunststoffbauteil, insbesondere Kunststoffplatte, ausgebildet ist.

21. Schubmaststapler (1) umfassend ein Fahrzeugchassis (3), das Fahrwerksräder (5), einen Fahrantrieb (6) und einen Lenkanrieb (7) umfasst, und eine Fahrerarbeitsplatzeinheit (2) nach einem der vorangegangenen Ansprüche, wobei die Fahrerarbeitsplatzeinheit (2) an dem Fahrzeugchassis (3) lösbar befestigbar ist.
